# EUROPÄISCHE PATENTSCHRIFT

(11) **EP 1 542 880 B1**
(45) Veröffentlichungstag und Bekanntmachung des Hinweises auf die Patenterteilung: **22.11.2006**
(21) Anmeldenummer: 03807808.5
(22) Anmeldetag: 28.08.2003
(51) Int. Cl.: B60H 1/00, F25B 47/00

(54) **VERFAHREN ZUM BETREIBEN EINES VERDAMPFERS UND VORRICHTUNG HIERFÜR**
METHOD FOR OPERATING AN EVAPORATOR AND CORRESPONDING DEVICE
PROCEDE D'EXPLOITATION D'UN EVAPORATEUR ET DISPOSITIF APPROPRIE

(30) Priorität: 12.09.2002 DE 10242520
(43) Veröffentlichungstag der Anmeldung: 22.06.2005
(73) Patentinhaber: Behr GmbH & Co. KG, 70469 Stuttgart (DE)
(72) Erfinder: KLINGLER, Dietrich, 73540 Heubach (DE); OTTO, Jürgen, 75428 Illingen (DE); SCHMADL, Dieter, 71672 Marbach (DE); SCHWAHN, Werner, 71701 Schwieberdingen (DE); VOIGT, Klaus, 74321 Bietigheim-Bissingen (DE)
(74) Vertreter: Grauel, Andreas
(86) Internationale Anmeldenummer: PCT/EP2003/009528
(87) Internationale Veröffentlichungsnummer: WO 2004/033236

(56) Entgegenhaltungen:
- EP-A- 0 900 678
- EP-A- 1 221 389
- EP-A- 1 231 088
- DE-A- 19 807 341
- US-A- 5 816 066

## Beschreibung

Die Erfindung betrifft ein Verfahren zum Betreiben eines Verdampfers, insbesondere eines Verdampfers für ein Kraftfahrzeug, gemäß dem Oberbegriff des Anspruchs 1 sowie eine entsprechende Vorrichtung hierfür,

In der EP 0 900 678 A1 wird eine Klimaanlage vorgeschlagen, bei der zu Zwecken der Bauraumverringerung Verdampfer und Heizkörper in Luftströmungsrichtung unmittelbar aufeinander abfolgend angeordnet werden. Zur Steuerung der Luft-Durchströmung des Heizkörpers, bzw. zum Bypass desselben sind Abdeckklappen vorgesehen, die dem Verdampfer bzw. dem Heizkörper nachgeordnet sind.

Im US-Patent US 5,816,066 ist eine Klimaanlage vorgesehen, bei der Heizkörper und Verdampfer im Luftführungskanal liegend und jeweils mit einem Abstand zueinander sowie zu den Begrenzungswänden des Luftführungskanals angeordnet sind. In den Zwischenräumen zwischen den Wänden und den Wärmetauschern bzw. zwischen den Wärmetauschern untereinander sind sowohl luftstromaufwärts als auch luftstromabwärts starre Wände bzw. bewegliche Verstellklappen angeordnet, um die Luft-Durchströmung von Verdampfer und/oder Heizkörper einstellen zu können.

In der EP 1 231 088 A2 ist eine Klimaanlage beschrieben, bei der zur Luft-Durchströmung bzw. luftströmungsseitigen Umgehung eines Verdampfers eine verstellbare Klappe in einem Bypasskanal, welcher parallel zum Verdampfer vorgesehen ist, angeordnet ist. In der DE 198 07 341 A1 ist dabei zusätzlich luftstromabwärts zum Verdampfer eine Verschlussklappenanordnung vorgesehen.

In der EP 1 221 389 A2 ist eine Klimaanlage beschrieben, bei der ein normaler Verdampfer und zusätzlich ein mit einem Kältespeicher versehener Verdampfer vorgesehen ist. In einem Ausführungsbeispiel wird vorgeschlagen, die beiden unterschiedlichen Verdampfer parallel zueinander anzuordnen und mittels einer Verstellklappe in Abhängigkeit vom jeweiligen Betriebszustand des Kraftfahrzeugs nur einen der beiden Verdampfer bzw. beide Verdampfer gleichzeitig durchströmen zu lassen.

Bei herkömmlichen Verdampfern, die als Heizer betrieben werden, führt nach dem Umschalten von Kühlen auf Heizen das am kalten Bauteil kondensierte Wasser in Verbindung mit dem aufgeheiztem Luftstrom zu einer feuchtwarmen Luft, die sich an kalten Flächen, wie insbesondere an der Windschutzscheibe, niederschlägt (Flash-Fog). Dies führt zu einer Gefährdung der Insassen.

Es ist Aufgabe der Erfindung, ein Verfahren zum Betreiben eines Verdampfers zur Verfügung zu stellen, welches dieses Problem verringert oder ganz beseitigt.

Diese Aufgabe wird gelöst durch Verfahren mit den Merkmalen des Anspruchs 1. Vorteilhafte Ausgestaltungen sind Gegenstand der Unteransprüche.

Erfindungsgemäß ist ein Betrieb vorgesehen, bei dem die Luft von dem ersten Teil des Verdampfers in den zweiten Teil des Verdampfers strömt, wobei sie im ersten Teil des Verdampfers kondensiertes Wasser transportiert oder zumindest den Transport des Kondenswassers unterstützt, so dass der erste Teil des Verdampfers in Anschluss an den entsprechenden Betrieb im Wesentlichen frei von Kondenswasser ist ("Kondenswasser ausblasen"). Der Transport des Kondenswassers kann durch die zusätzliche Wirkung der Schwerkraft durch eine Anordnung der beiden Teile des Verdampfers übereinander unterstützt werden.

Dabei weist der erste Teil des Verdampfers luftabströmseitig eine Verschlussvorrichtung auf, die für den Betriebszustand "Kondenswasser ausblasen" geschlossen werden kann.

Weiterhin werden beim Umschalten von Kühlbetrieb auf Heizbetrieb die Verschlussvorrichtungen des ersten Teiles des Verdampfers geschlossen. Dies verhindert ein Durchströmen von Luft und beschleunigt die Kondensation von in der Luft enthaltenen Feuchtigkeit im ersten Teil, bis beispielsweise eine bestimmte Zeit verstrichen ist. Alternativ kann die Regelung temperaturabhängig erfolgen, d.h. die Temperatur des ersten Teiles des Verdampfers wird überwacht. Andere Regelungen, beispielsweise mittels Feuchtigkeitssensoren oder optischer Überwachung, sind möglich. Anschließend wird vorzugsweise die lufteinströmseitig angeordnete Verschlussvorrichtung des ersten Teiles geöffnet, so dass Luft den ersten Teil des Verdampfers in Richtung des zweiten Teiles des Verdampfers durchströmt und das Kondenswasser mitreißt.

Vorzugsweise wird nach dem Entfernen des Kondenswassers aus dem ersten Teil die luftabströmseitig angeordnete Verschlussvorrichtung des ersten Teiles geöffnet und der Heizbetrieb gestartet. Die Steuerung erfolgt vorzugsweise zeitabhängig, jedoch sind auch andere Steuerungen/Regelungen möglich.

Vorzugsweise weisen die Verschlussvorrichtungen herkömmliche Klappen, Scherenklappen, rolladenartige Verschlussvorrichtungen, spinnenartig angeordnete Bänder und/oder Rollbänder auf, und zwar einzeln oder in beliebiger Kombination.

Vorzugsweise ist ein Gebläse vorgesehen, welches die Zufuhr der eintretenden Umgebungsluft mitregelt und bei Bedarf den Luftdurchsatz erhöht.

Das erfindungsgemäße Verfahren bzw. die entsprechende Vorrichtung bieten eine einfache und kostengünstige Lösung zur Verhinderung oder zumindest eine Verringerung von in der zugeführten Umgebungsluft enthaltener und an kalten Flächen kondensierender Feuchtigkeit, die für alle Kältemittel geeignet ist. Insbesondere ist keine kältemittelseitige Änderung des Verdampfers erforderlich. Die Montage ist einfach.

Im Folgenden wird die Erfindung anhand von vier Ausführungsbeispielen unter Bezugnahme auf die Zeichnung im Einzelnen erläutert. In der Zeichnung zeigen:
- Fig. 1: einen vereinfacht dargestellten Verdampfer gemäß dem ersten Ausführungsbeispiel,
- Fig. 2a bis 2c: verschiedene Betriebszustände des Verdampfers von Fig. 1,

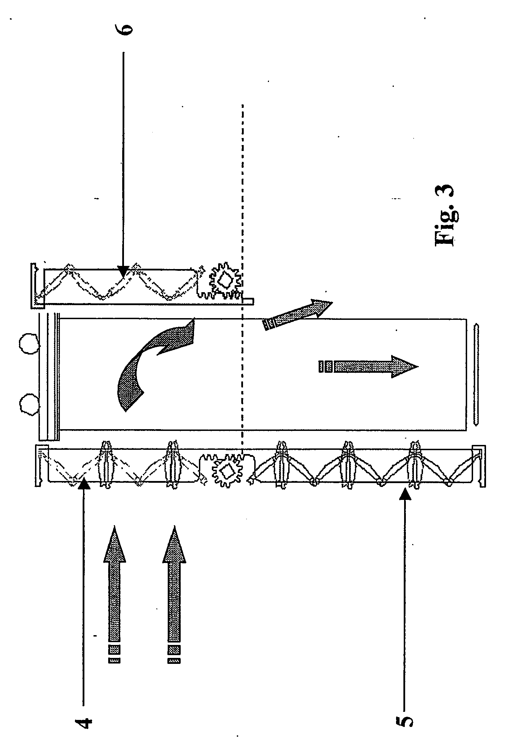

- Fig. 3: den Verdampfer von Fig. 1 im Betriebszustand "Kondenswasser ausblasen",
- Fig. 4: ein zweites Ausführungsbeispiel,
- Fig. 5: ein drittes Ausführungsbeispiel, und
- Fig. 6: ein viertes Ausführungsbeispiel.

Ein erfindungsgemäßer Verdampfer 1, welcher Teil einer Klimaanlage eines Kraftfahrzeugs ist, ist zweiteilig aufgebaut. Hierbei ist der Verdampfer 1 in zwei ungleiche Teile 2 und 3 aufgeteilt, wobei der kleinere, im Folgenden als erster Teil 2 bezeichnete Teil als Heizer und der größere, im Folgenden als zweiter Teil 3 bezeichnete Teil als Kühler dient. Hierbei nimmt der Teil 2 gemäß dem ersten und auch den folgenden Ausführungsbeispielen 2/5 und der Teil 3 3/5 des Volumens des Verdampfers 1 ein. Der erste Teil 2 des Verdampfers 1 ist oberhalb vom zweiten Teil 3 angeordnet.

Gemäß dem ersten Ausführungsbeispiel sind vor dem Verdampfer 1, d.h. luftanströmseitig vor Teil 2 und 3, jeweils Verschlussvorrichtungen 4 bzw. 5 in Form von Scherenklappen angeordnet, welche mittels einer Stellvorrichtung betrieben werden. Hierbei sind die Stellungen Teil 2 "auf" und Teil 3 "zu", Teil 2 "auf" und Teil 3 "auf", Teil 2 "zu" und Teil 3 "auf" möglich. Hinter Teil 2, d.h. luftabströmseitig, ist eine weitere Verschlussvorrichtung 6 in Form von Scherenklappen 6 angeordnet, welche mittels einer weiteren Stellvorrichtung betrieben wird.

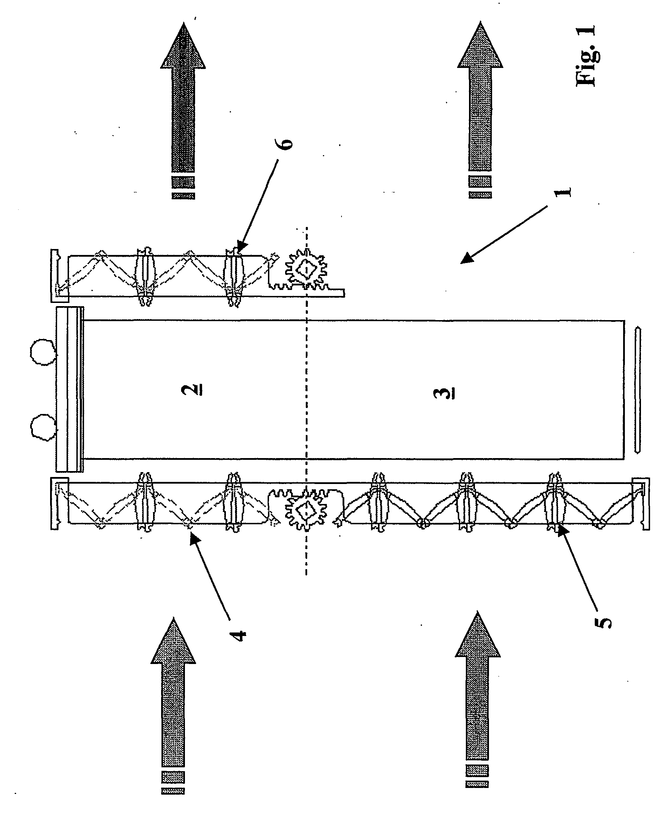

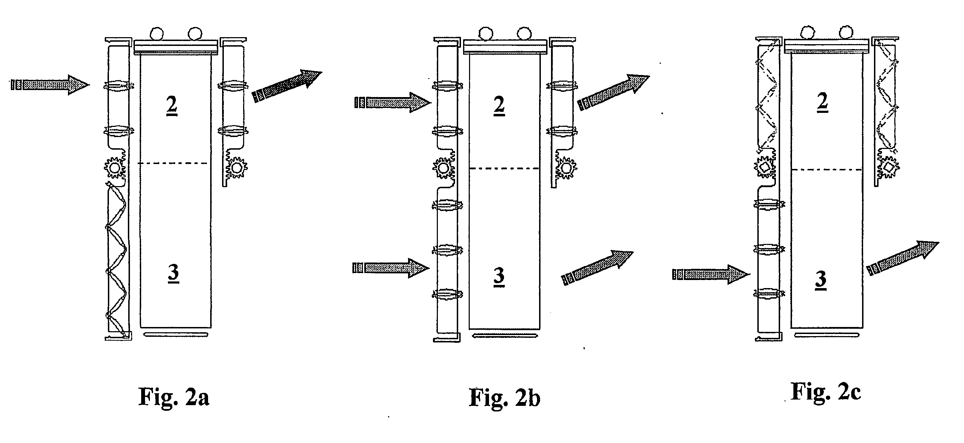

In Fig. 1 sind die verschiedenen Stellungen der Verschlussvorrichtungen 4, 5 und 6 dargestellt. Der Luftstrom ist durch Pfeile angedeutet. Fig. 2a zeigt den Heizbetrieb. Bei diesem sind die Verschlussvorrichtungen 4 und 6 von Teil 2 auf und die Verschlussvorrichtung 5 von Teil 3 zu. Beim in Fig. 2b dargestellten Kühlbetrieb sind sämtliche Verschlussvorrichtungen 4, 5 und 6 auf und beim in Fig. 2c dargestellten Teil-Kühlbetrieb sind die Verschlussvorrichtungen 4 und 6 von Teil 2 zu, die Verschlussvorrichtung 5 von Teil 3 auf, so dass lediglich der Teil 3 des Verdampfers 1 kühlt.

Der Verdampfer 1 wird im Prinzip auf bekannte Weise betrieben, wobei der Verdampfer 1 - je nach Betriebsart - durchgehend kalt oder warm ist. Erfolgt eine Umstellung von Kühl- auf Heizbetrieb so werden die Verschlussvorrichtungen 4, 6 von Teil 2 geschlossen. Beim Ansteigen der Temperatur kondensiert Wasser und lagert sich im Heizer, d.h. in Teil 2 des Verdampfers 1, ab. Nach Ablauf einer vorbestimmten Zeit wird die Verschlussvorrichtung 4 auf der Lufteintrittsseite geöffnet. Das Kondenswasser wird durch das Öffnen der Verschlussvorrichtung 4 aus dem Teil 2 des Verdampfers 1 ausgeblasen (Betriebszustand "Kondenswasser ausblasen"), wobei das Kondenswasser infolge der geschlossenen Verschlussvorrichtung 6 auf der Luftaustrittsseite in Richtung des einzig freien Auslasses für die Luft, .d.h. nach unten in den zweiten Teil 3 des Verdampfers 1 und in Richtung Luftabströmseite gedrückt wird und so das Kondenswasser, unter Unterstützung der Luft und der Schwerkraft, schnell in den zweiten Teil 3 und von dort weiter nach unten abgeführt werden kann. Nach Ablauf einer vorbestimmten Zeit wird die luftabströmseitige Verschlussvorrichtung 6 vom ersten Teil 2 des Verdampfers 1 geöffnet und der Heizbetrieb aufgenommen.

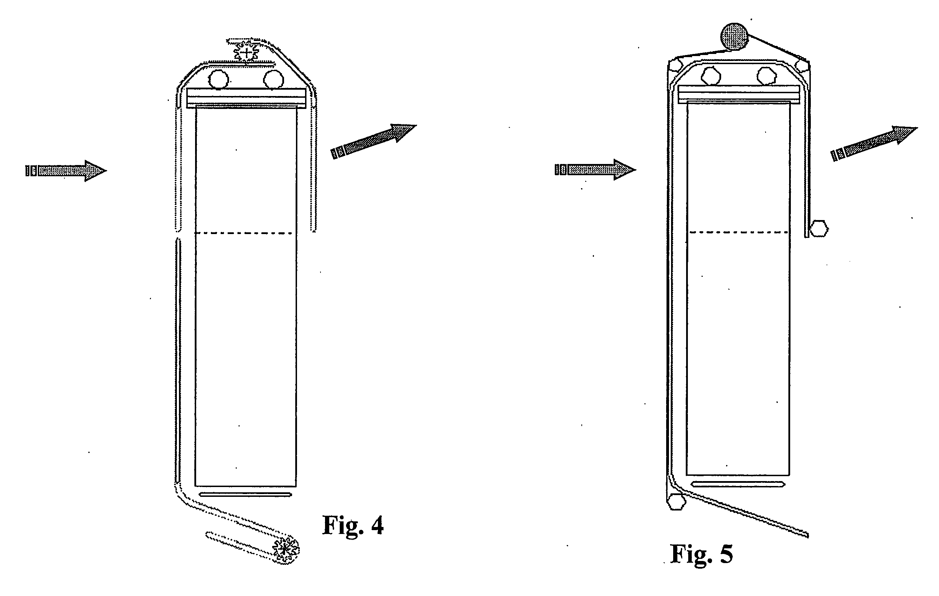

Fig. 4 zeigt als zweites Ausführungsbeispiel einen Verdampfer, bei dem anstelle der Verschlussvorrichtungen 4, 5 und 6 rolladenartige Verschlussvorrichtungen vorgesehen sind. Die Funktion entspricht der im ersten Ausführungsbeispiel beschriebenen Funktion der Scherenklappen.

Fig. 5 zeigt als drittes Ausführungsbeispiel einen Verdampfer, bei dem anstelle der Verschlussvorrichtungen 4, 5 und 6 spinnenartig angeordnete Bänder die Verschlussvorrichtungen bilden. Die Funktion entspricht ebenfalls der im ersten Ausführungsbeispiel beschriebenen Funktion der Scherenklappen.

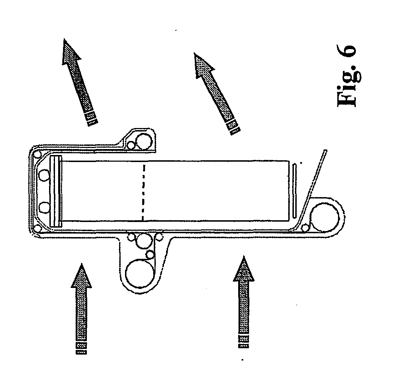

Fig. 6 zeigt als viertes Ausführungsbeispiel einen Verdampfer, bei dem anstelle der Verschlussvorrichtungen 4, 5 und 6 Rollbänder vorgesehen sind. Auch die Funktion dieser Verschlussvorrichtungen entspricht der im ersten Ausführungsbeispiel beschriebenen Funktion der Scherenklappen.

### Bezugszeichenliste

- 1: Verdampfer
- 2: erster Teil (Heizer)
- 3: zweiter Teil (Kühler)
- 4, 5, 6: Verschlussvorrichtung

## Patentansprüche

1. Verfahren zum Betreiben eines Verdampfers, insbesondere eines Verdampfers für ein Kraftfahrzeug, wobei der Verdampfer (1) zwei von Luft durchströmte, mittels Verschlussvorrichtungen (4, 5) verschließbare Teile (2, 3) aufweist, ein Betrieb vorgesehen ist, bei dem die Luft vom ersten Teil (2) des Verdampfers (1) in den zweiten Teil (3) des Verdampfers (1) strömt, luftabströmseitig beim ersten Teil (2) eine Verschlussvorrichtung (6) geschlossen werden kann und beim Umschalten von Kühlbetrieb auf Heizbetrieb die Verschlussvorrichtungen (4, 6) des ersten Teiles (2) des Verdampfers (1) geschlossen werden, **dadurch gekennzeichnet, dass** nach dem Schließen der Verschlussvorrichtungen (4, 6) des ersten Teiles (2) des Verdampfers (1) und dem Kondensieren von Wasser im ersten Teil (2) eine lufteinströmseitig angeordnete Verschlussvorrichtung (4) des ersten Teiles (2) geöffnet wird.

2. Verfahren nach Anspruch 1, **dadurch gekennzeichnet, dass** die in den zweiten Teil (3) des Verdampfers (1) strömende Luft Kondenswasser aus dem ersten Teil (2) des Verdampfers (1) transportiert.

3. Verfahren nach Ansprüche 1 oder 2, **dadurch gekennzeichnet, dass** nach dem Entfernen des Kondenswassers aus dem ersten Teil (2) die luftabströmseitig angeordnete Verschlussvorrichtung (6) des ersten Teiles (2) geöffnet wird.

4. Verfahren nach einem der vorstehenden Ansprüche, **dadurch gekennzeichnet, dass** die Steuerung oder Regelung der Verschlussvorrichtungen (4, 6) zeitabhängig erfolgt.

5. Vorrichtung zur Steuerung oder Regelung eines einen zweiteiligen Verdampfer (1) durchströmenden Luftstromes, **dadurch gekennzeichnet, dass** erste Teil (2) des Verdampfers (1) lufteinströmseitig und luftabströmseitig eine Verschlussvorrichtung (4, 6) aufweist, und Kondenswasser vom ersten Teil (2) des Verdampfers (1) in den zweiten Teil (3) mittels Luft transportierbar ist und aus dem zweiten Teil (3) abführbar ist.

6. Vorrichtung nach Anspruch 5, **dadurch gekennzeichnet, dass** der zweite Teil (3) des Verdampfers (1) lufteinströmseitig eine Verschlussvorrichtung (5) aufweist.

7. Vorrichtung nach einem der Ansprüche 5 oder 6, **dadurch gekennzeichnet, dass** der erste Teil (2) oberhalb vom zweiten Teil (3) angeordnet ist.

8. Vorrichtung nach einem der Ansprüche 5 bis 7, **dadurch gekennzeichnet, dass** die Verschlussvorrichtung (4, 5, 6) Klappen, Scherenklappen, rolladenartige Verschlussvorrichtungen, spinnenartig angeordnete Bänder und/oder Rollbänder aufweist.

9. Vorrichtung nach einem der Ansprüche 5 bis 8, **dadurch gekennzeichnet, dass** der erste Teil (2) kleiner als der zweite Teil (3) des Verdampfers (1) ist.

10. Vorrichtung nach Anspruch 9, **dadurch gekennzeichnet, dass** der erste Teil (2) 2/5 und der zweite Teil (3) 3/5 des Volumens des Verdampfers (1) einnehmen.

11. Vorrichtung nach einem der Ansprüche 5 bis 10, **dadurch gekennzeichnet, dass** ein Gebläse vorgesehen ist.

## Claims

1. A process for operating an evaporator, in particular an evaporator in a motor vehicle, the evaporator (1) having two parts (2, 3) through which air flows and which can be closed by means of closing devices (4, 5), a method of operation being provided in which the air flows from the first part (2) of the evaporator (1) into the second part (3) of the evaporator (1), it being possible to close a closing device (6) in the first part (2) on the air outflow side and the closing devices (4, 6) of the first part (2) of the evaporator (1) being closed when switching from cooling mode to heating mode,
**characterised in that**
following the closure of the closing devices (4, 6) of the first part (2) of the evaporator (1) and the condensation of water in the first part (2) a closing device (4) of the first part (2) positioned on the air inflow side is opened.

2. A process in accordance with claim 1,
**characterised in that**
the air flowing into the second part (3) of the evaporator (1) transports condensation water from the first part (2) of the evaporator.

3. A process in accordance with claim 1 or 2,
**characterised in that**
once the condensation water has been removed from the first part (2), the closing device (6) of the first part (2) which is positioned on the air discharge side is opened.

4. A process in accordance with one of the preceding claims,
**characterised in that**
the closing devices (4, 6) are controlled or regulated in a time-dependent manner.

5. A device for controlling or regulating a flow of air flowing through a two-part evaporator (1),
**characterised in that**
the first part (2) of the evaporator (1) has a closing device (4, 6) on both the air inflow and the air outflow sides and condensation water can be transported from the first part (2) of the evaporator (1) to the second part (3) by means of air and discharged from the second part (3).

6. A device in accordance with claim 5,
**characterised in that**
the second part (3) of the evaporator (1) has a closing device (5) on the air inflow side.

7. A device in accordance with one of claims 5 or 6,
**characterised in that**
the first part (2) is positioned above the second part (3).

8. A device in accordance with one of claims 5 to 7,
**characterised in that**
the closing device (4, 5, 6) has flaps, scissor flaps, roller shutter-type closing devices, strips positioned in a spider's web configuration and/or roller strips

9. A device in accordance with one of claims 5 to 8,
**characterised in that**
the first part (2) is smaller than the second part (3) of the evaporator (1).

10. A device in accordance with claim 9,
**characterised in that**
the first part (2) accounts for 2/5ths and the second part (3) 3/5ths of the volume of the evaporator (1).

11. A device in accordance with one of claims 5 to 10,
**characterised in that**
a fan is provided.

## Revendications

1. Procédé d'exploitation d'un évaporateur, notamment d'un évaporateur pour un véhicule automobile, ledit évaporateur (1) comportant deux éléments (2, 3) qui peuvent être fermés à l'aide d'obturateurs (4, 5) et par lesquels passe de l'air, une exploitation étant prévue selon laquelle l'air du premier élément (2) de l'évaporateur (1) passe dans le deuxième élément (3) dudit évaporateur (1), un obturateur (6) pouvant être fermé côté refoulement de l'air du premier élément (2), les obturateurs (4, 6) du premier élément (2) de l'évaporateur (1) fermant lors de la commutation depuis le régime refroidissement en régime chauffage, **caractérisé en ce qu'**un obturateur (4) disposé côté admission de l'air du premier élément (2) s'ouvre à la suite de la fermeture des obturateurs (4, 6) dudit premier élément (2) de l'évaporateur (1) et à la suite de la condensation de l'eau dans ce premier élément (2).

2. Procédé selon la revendication 1, **caractérisé en ce que** l'air s'écoulant dans le deuxième élément (3) de l'évaporateur (1) transporte de l'eau de condensation du premier élément (2) dudit évaporateur (1).

3. Procédé selon les revendications 1 ou 2, **caractérisé en ce que** l'obturateur (6) disposé côté refoulement de l'air du premier élément (2) s'ouvre à la suite de l'évacuation de l'eau de condensateur à l'extérieur dudit premier élément (2).

4. Procédé selon l'une quelconque des revendications précédentes, **caractérisé en ce que** la commande ou la régulation des obturateurs (4, 6) est fonction du temps.

5. Dispositif de commande ou de régulation d'un flux d'air passant par un évaporateur à deux éléments (1), **caractérisé en ce que** le premier élément (2) de l'évaporateur (1) comporte un obturateur (4, 6) côté admission de l'air et côté refoulement de l'air, **en ce que** de l'eau de condensation peut être transportée depuis le premier élément (2) de l'évaporateur (1) dans le deuxième élément (3) à l'aide d'air et que ladite eau peut être évacuée depuis ledit deuxième élément (3).

6. Dispositif selon la revendication 5, **caractérisé en ce que** le deuxième élément (3) de l'évaporateur (1) comporte un obturateur (5) côté admission de l'air.

7. Dispositif selon l'une quelconque des revendications 5 ou 6, **caractérisé en ce que** le premier élément (2) est disposé en amont du deuxième élément (3).

8. Dispositif selon l'une quelconque de revendications 5 à 7, **caractérisé en ce que** l'obturateur (4, 5, 6) comprend des clapets, des clapets articulés, des obturateurs du type à volet roulant, des bandes et/ou des bandes roulantes disposées en araignée.

9. Dispositif selon l'une quelconque des revendications 5 à 8, **caractérisé en ce que** le premier élément (2) est plus petit que le deuxième élément (3) de l'évaporateur (1).

10. Dispositif selon la revendication 9, **caractérisé en ce que** le premier élément (2) occupe 2/5 et le deuxième élément (3) 3/5 du volume de l'évaporateur (1).

11. Dispositif selon l'une quelconque des revendications 5 à 10, **caractérisé en ce qu'**une soufflante est prévue.
